# FASCICULE DE BREVET EUROPEEN

(11) **EP 2 354 499 B1**
(45) Date de publication et mention de la délivrance du brevet: **16.01.2013**
(21) Numéro de dépôt: 10290622.9
(22) Date de dépôt: 23.11.2010
(51) Int. Cl.: F02D 13/02, F02D 23/02, F02B 25/02

(54) **Procédé de balayage des gaz brûlés résiduels d'un moteur multi cylindres à combustion interne suralimenté à injection directe fonctionnant à charges partielles**
Verfahren zur Spülung der verbrannten Abgase eines Verbrennungsmotors mit Aufladung und Direkteinspritzung in Teillastbetrieb.
Method for scavenging residual burnt gas in a supercharged direct-injection internal combustion engine operating at partial loads.

(30) Priorité: 19.01.2010 FR 1000193
(43) Date de publication de la demande: 10.08.2011
(73) Titulaire: IFP Energies nouvelles, 92852 Rueil-Malmaison Cedex (FR)
(72) Inventeur: Bression, Guillaume, 94300 Vincennes (FR)

(56) Documents cités:
- EP-A1- 1 857 654
- FR-A1- 2 926 850
- US-A- 4 232 641
- US-A- 4 424 790

## Description

La présente invention se rapporte à un procédé de balayage des gaz brûlés résiduels pour un moteur à combustion interne suralimenté à injection directe fonctionnant à charges partielles.

Comme cela est notablement connu, la puissance délivrée par un moteur à combustion interne est dépendante de la quantité d'air introduite dans la chambre de combustion de ce moteur.
Comme la quantité d'air est proportionnelle à sa densité, il est usuel de comprimer l'air extérieur avant qu'il ne soit admis dans cette chambre de combustion lorsqu'une demande d'une forte puissance du moteur est requise.
Cette opération, appelée suralimentation, peut être réalisée par tous moyens, tel qu'un turbocompresseur.

En outre, de façon à pouvoir encore plus augmenter cette quantité d'air dans la chambre de combustion du cylindre, il est prévu d'évacuer les gaz brûlés résiduels contenus initialement dans le volume mort de la chambre de combustion au voisinage du point mort haut du piston pour les remplacer par de l'air suralimenté. Cette étape est plus communément appelée balayage des gaz brûlés et se réalise généralement avant la fin de la phase d'échappement du moteur.

Comme cela est connu par le document FR 2 886 342, ce balayage se produit, en fin de phase d'échappement du moteur et en début de phase d'admission, lorsque la pression à l'admission du moteur est supérieure à sa pression à l'échappement. Cet étape de balayage est réalisé par un croisement entre les soupapes d'échappement et d'admission d'un même cylindre en ouvrant simultanément ces soupapes pendant quelques degrés à quelques dizaines de degrés d'angle de rotation de vilebrequin.

Grâce à cela, l'air d'admission suralimenté est introduit dans la chambre de combustion avant la fin de la phase d'échappement en repoussant les gaz d'échappement qui y sont contenus. Ces gaz sont ainsi évacués au travers de la soupape d'échappement et sont remplacés par de l'air d'admission.

Il est également connu, par le document FR 2 926 850 du demandeur, un autre procédé de balayage des gaz brûlés résiduels par lequel une séquence d'ouverture/fermeture de la soupape d'échappement est réalisée lors de la phase d'échappement du moteur, et, pendant cette séquence d'ouverture/fermeture de la soupape d'échappement, une séquence d'ouverture/fermeture de la soupape d'admission est réalisée de façon à effectuer le balayage des gaz brûlés résiduels.

Ce type de moteur bien que donnant satisfaction présente néanmoins des inconvénients non négligeables.

En effet, pour des moteurs fonctionnant à charges partielles, l'étape de balayage des gaz brûlés ne peut être produite. Ceci est essentiellement dû au fait que la pression à l'admission est inférieure à la pression à l'échappement. Par cela, lorsque les soupapes d'échappement et d'admission sont ouvertes, les gaz d'échappement ne peuvent être évacués hors de la chambre de combustion au travers de la soupape d'échappement.
De ce fait, il subsiste une quantité de gaz brulés résiduels dans le volume mort et des gaz d'échappement sont introduits dans le collecteur d'admission en empêchant l'admission d'air dans le cylindre.

La présente invention se propose de remédier aux inconvénients ci-dessus grâce à un procédé de balayage de gaz brulés pour un moteur fonctionnant à charges partielles durant lequel la pression à l'échappement est diminuée pour pouvoir être inférieure à la pression à l'admission.

A cet effet, la présente invention concerne un procédé de balayage des gaz brûlés résiduels d'un moteur à combustion interne multi cylindres suralimenté à injection directe, notamment de type Diesel, fonctionnant à charges partielles, avec un piston se déplaçant alternativement entre un point mort haut et un point mort bas, et selon lequel on réalise une étape de balayage des gaz brûlés par une séquence d'ouverture/fermeture d'au moins une soupape d'échappement lors la phase d'échappement du moteur et par au moins une séquence d'ouverture/fermeture d'au moins une soupape d'admission pendant cette séquence d'ouverture/fermeture de la soupape d'échappement et, pendant la phase d'admission du moteur qui succède à la phase d'échappement, à réaliser au moins une séquence d'ouverture/fermeture d'au moins une soupape d'admission, caractérisé en ce qu'il consiste, après la phase d'échappement, à contrôler le moment de fermeture de la soupape d'admission de manière à entrainer une diminution de la pression à l'échappement pour réaliser un différentiel de pression entre la pression à l'admission du moteur et la pression à l'échappement qui soit favorable à la pression à l'admission.

Le procédé peut consister à réaliser la fermeture de la soupape d'admission avant la fin de la phase d'admission de manière à entrainer une diminution de la pression à l'échappement.

Le procédé peut consister à réaliser la fermeture de la soupape d'admission à un angle de vilebrequin qui est supérieure à 0° et inférieur ou égale +100° avant le point mort bas de la phase d'admission (A).

Le procédé peut consister à réaliser la fermeture de la soupape d'admission après la fin de la phase d'admission de manière à entrainer une diminution de la pression à l'échappement.

Le procédé peut consister à réaliser la fermeture de la soupape d'admission à un angle de vilebrequin qui est inférieur à -100° et supérieure à 0° après le point mort bas de la phase d'admission (A).

Les autres caractéristiques et avantages de l'invention vont apparaître à la lecture de la description qui va suivre, donnée à titre uniquement illustratif et non limitatif, et à laquelle sont annexés :
- la figure 1 qui montre un moteur suralimenté à combustion interne utilisant le procédé selon l'invention ;
- la figure 2 qui montre des courbes illustrant les différentes lois de levée (L) des soupapes d'admission et d'échappement du cylindre durant l'étape de balayage cela en fonction de la rotation du vilebrequin (en degrés V) du moteur utilisant le procédé selon l'invention et
- la figure 3 qui est un graphique avec des courbes illustrant la pression (P en bar) à l'admission (Pa) et à l'échappement (Pe) d'un cylindre en fonction de la rotation du vilebrequin (en degrés V).

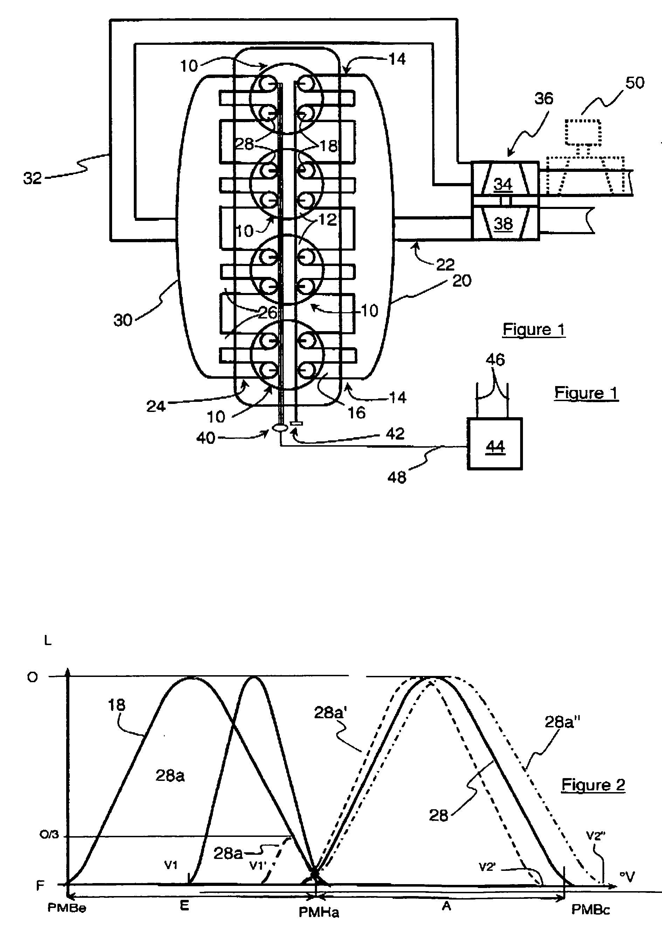

Sur la figure 1, le moteur à combustion interne illustré est un moteur à combustion interne suralimenté de type à autoallumage, notamment Diesel, fonctionnant selon un mode à quatre temps avec une phase d'admission A, de compression C, de détente D et d'échappement E.

Ce moteur comprend au moins deux cylindres 10, ici quatre cylindres, dans lequel coulisse un piston (non représenté) en un mouvement alternatif rectiligne entre un point mort haut (PMH) et un point mort bas (PMB) en délimitant une chambre de combustion 12 dans laquelle se produit la combustion d'un mélange carburé.

Comme cela est largement connu, ce mélange carburé peut être, soit un mélange d'air suralimenté additionné à des gaz d'échappement recirculés (ou EGR) avec un carburant, soit un mélange d'air suralimenté avec un carburant.

Le cylindre 10 comporte au moins un moyen d'échappement 14 des gaz brûlés, ici deux, comprenant une tubulure d'échappement 16 associée à un moyen d'obturation, comme une soupape d'échappement 18.
Les tubulures d'échappement 16 aboutissent à un collecteur d'échappement 20 permettant l'évacuation des gaz brûlés issus des chambres de combustion, ce collecteur étant relié à une ligne d'échappement 22.
Ce cylindre comporte également au moins un moyen d'admission 24, ici deux, qui comprend une tubulure d'admission 26 contrôlée par un moyen d'obturation, tel qu'une soupape d'admission 28.
De manière habituelle, un collecteur d'admission 30 est relié aux tubulures d'admission 26 et permet de répartir de l'air frais (généralement suralimenté additionné ou non de gaz d'échappement recirculés) dans les chambres de combustion 12.

Le collecteur d'admission est relié par une conduite 32 à la sortie de la section de compression 34 d'un turbocompresseur 36 alors que le collecteur d'échappement 20 est raccordé par la ligne 22 à l'entrée de la turbine 38 de ce turbocompresseur.

Les soupapes d'admission 28 sont commandées en ouverture et en fermeture par tous moyens connus permettant de faire varier la loi de levée de ces soupapes. Plus particulièrement, ces moyens permettent de réaliser au moins une double levée de ces soupapes pendant le fonctionnement du moteur nécessitant une forte puissance ou une simple levée lors du fonctionnement conventionnel de ce moteur.

Pour cela, il est utilisé des moyens de commande 40, de type arbre à cames WA (Variable Valve Actuation), qui permettent de réaliser les deux lois de levées de ces soupapes. Une première loi permet d'effectuer au moins une séquence d'ouverture/fermeture des soupapes d'admission 28 pendant la phase d'échappement E du moteur suivie d'une séquence conventionnelle d'ouverture/fermeture de ces soupapes pendant la phase d'admission A. L'autre loi de levée permet d'exécuter uniquement une séquence d'ouverture/fermeture des soupapes d'admission pendant la phase d'admission A du moteur.

A titre d'exemple non limitatif, cet arbre à cames comporte une came associée à une seconde came permettant d'assurer la loi de double levée de ces soupapes d'admission pendant la phase d'échappement E et d'admission A du moteur ainsi qu'un dispositif de débrayage rendant inopérationnelle l'une des cames, par exemple la seconde came, pour réaliser la simple levée des soupapes d'admission pendant la phase d'admission du moteur.

Les soupapes d'échappement 18 sont commandées en ouverture et fermeture par tous moyens conventionnels, comme un arbre à cames classique 42 commandé en rotation par une voie d'entraînement reliée au vilebrequin de ce moteur, telle qu'une courroie crantée ou une chaîne.

Bien entendu et cela sans sortir du cadre de l'invention, ces moyens de commande 40 et 42 peuvent être des moyens de commande spécifiques pour chaque soupape, comme un actionneur électromagnétique, électropneumatique ou autre, qui agit directement sur la tige de la soupape.

Il est à noter que le terme "levée" correspond à la représentation graphique (selon deux axes) du mouvement d'une soupape à partir du début de son ouverture de l'orifice de la tubulure jusqu'à la fin de sa fermeture de cet orifice en passant par sa position de pleine ouverture.

Ce moteur comprend également une unité de calcul 44, dite calculateur-moteur, qui contient des cartographies ou des tables de données permettant, en fonction des valeurs des paramètres du moteur transmises par des lignes de données 46, comme notamment la pression d'admission Pa dans le collecteur d'admission 30 et la pression d'échappement Pe dans le collecteur d'échappement 20, le régime du moteur ou sa charge, d'évaluer la puissance que doit générer ce moteur pour répondre à la demande du conducteur du véhicule.

Plus précisément, ce calculateur permet, en fonction de ces valeurs, de contrôler les lois de levée de soupapes d'admission 28 par une ligne de commande 48 agissant sur les moyens 40 de façon à permettre une simple levée ou une double levée de ces soupapes.

Ainsi, lorsque le moteur doit évoluer dans des conditions qui correspondent à une demande de forte puissance, le calculateur contrôle ce moteur pour qu'il fonctionne avec une étape de balayage des gaz brûlés résiduels présents dans la chambre de combustion tout en permettant de générer un différentiel de pression entre la pression d'admission Pa relevée dans le collecteur d'admission et la pression à l'échappement Pe régnant dans le collecteur d'échappement qui soit favorable à la pression à l'admission Pa.

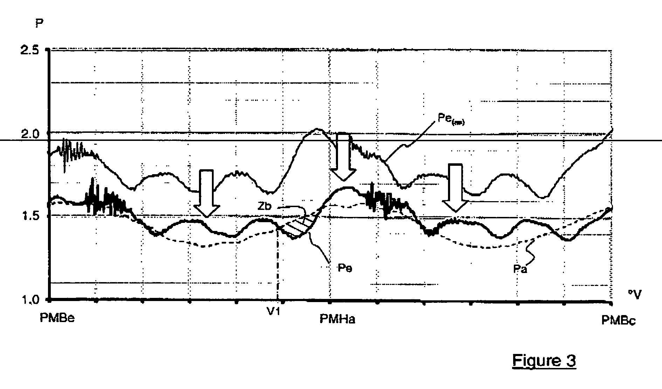

En se rapportant en plus à la figure 2, qui montre les différentes lois de levée des soupapes d'admission 28 et d'échappement 18 entre une position d'ouverture (0) et de fermeture (F) en fonction de l'angle de rotation de vilebrequin (°V), associée à la figure 3 montrant les pressions d'admission Pa et d'échappement Pe durant ces mêmes angles de rotation de vilebrequin, le calculateur 44 contrôle plus particulièrement les moyens de commande 40 par la ligne 48 pour réaliser une double levée des soupapes d'admission 28 pour répondre à la demande de puissance avec une étape de balayage des gaz brûlés.

Plus précisément et comme mieux illustré sur cette figure 2, pendant la phase d'échappement E du moteur, les soupapes d'échappement 18 suivent conventionnellement une séquence d'ouverture/fermeture entre le point mort bas échappement (PMBe) et le point mort haut admission (PMHa) du piston de façon à évacuer les gaz d'échappement contenus dans la chambre de combustion vers le collecteur d'échappement 20.
Conjointement à cette séquence d'ouverture/fermeture des soupapes d'échappement, les moyens de commande 40 sont pilotés par le calculateur pour réaliser au moins une séquence d'ouverture/fermeture des soupapes d'admission 28a pendant cette phase d'échappement et durant la séquence d'ouverture/fermeture des soupapes d'échappement.
Plus particulièrement et à titre d'exemple, ces soupapes d'admission s'ouvrent à l'angle de vilebrequin V1 après le PMBe et se ferment au PMHa.

Dans le cas d'un moteur fonctionnant à faibles charges ou à charges partielles avec une séquence d'ouverture/fermeture des soupapes d'admission 28a (figure 2) pendant la phase d'échappement, la courbe de pression à l'échappement Pe₍ₐₐ₎ (en trait fin) pour ce moteur est toujours située au dessus de la courbe de pression à l'admission Pa (en trait pointillé) durant tout le cycle de fonctionnement du moteur, comme cela est illustré sur la figure 3, avec pour conséquence une pression à l'échappement qui est supérieure à la pression à l'admission.
Compte tenu du différentiel de pression qui est favorable à la pression à l'échappement, les gaz d'échappement contenus dans la chambre de combustion 12 ne peuvent être évacués au travers des soupapes d'échappement 18 vers le collecteur d'échappement 20.

Pour pouvoir réaliser l'étape de balayage de gaz brûlés mentionnée plus haut, le calculateur pilote les moyens de commande 40 des soupapes d'admission pour réaliser au moins une séquence d'ouverture/fermeture de ces soupapes d'admission pendant la phase d'admission (A) d'une manière telle que la fermeture de ces soupapes d'admission se produit avant (courbe 28a' avec un angle de vilebrequin V2' pour la fermeture) ou après (courbe 28a" avec un angle de vilebrequin V2" pour la fermeture) le point mort bas compression (PMBc).

Avantageusement, il est prévu que l'angle V2' soit plus petit ou égal à +100° et plus grand que 0° avant le PMBc et l'angle V2" soit plus grand que 0° et plus petit ou égal à -100° après le PMBc (le point mort bas de la phase d'admission étant confondu avec le PMBc)

Ceci a pour effet de générer une baisse du taux de compression effectif, une réduction du débit de gaz d'échappement et une augmentation de la température de ces gaz d'échappement dans la chambre de combustion du cylindre, ce qui entraine une diminution du remplissage du collecteur d'échappement et en conséquence de la pression à l'échappement.

Par cela, la courbe Pe₍ₐₐ₎ de la figure 3 est décalée vers le bas du graphique pour arriver à la position de la courbe Pe.

Bien entendu, il est à la portée de l'homme du métier de déterminer les angles de vilebrequin (V2' ou V2") pour la fermeture de la soupape d'admission de manière à ce que la position de la courbe de pression à l'échappement Pe soit telle qu'il existe une zone Zb entre les deux courbes Pe et Pa où le différentiel de pression soit en faveur de la pression à l'admission pendant la phase de balayage des gaz brûlés (entre l'angle de vilebrequin V1 et le PMHa).

Ainsi, les gaz d'échappement contenus dans la chambre de combustion sont de ce fait remplacés par de l'air suralimenté, ce qui va permettre de pouvoir augmenter globalement la quantité d'air présent dans la chambre de combustion à la fin de la phase d'admission A du moteur et ainsi améliorer les diminutions des émissions de polluants et la réduction de la consommation.

Lorsque ce moteur fonctionne à pleine charge le procédé de balayage est celui décrit dans la demande de brevet FR 2 926 850 avec une séquence d'ouverture/fermeture des soupapes d'échappement 18 lors la phase d'échappement E du moteur, une séquence d'ouverture/fermeture des soupapes d'admission 28 pendant cette séquence d'ouverture/fermeture de la soupape d'échappement, et séquence d'ouverture/fermeture conventionnelle des soupapes d'admission 28 pendant la phase d'admission du moteur.

Différemment à l'invention, pour pouvoir réaliser un différentiel de pression entre la pression à l'admission et la pression à l'échappement qui soit favorable à la pression à l'admission pendant l'étape de balayage, il est également possible d'augmenter la quantité d'air suralimenté introduite dans l'admission du moteur. Ceci a pour effet d'entrainer une augmentation de la pression à l'admission sans que la pression à l'échappement ne soit modifiée.

Grâce à l'invention, il est donc très facile de réaliser un balayage de gaz d'échappement pour un moteur fonctionnant selon différentes configuration de faibles charges à pleine charges.

Pour la présente invention, la hauteur de la levée des soupapes d'admission 28a est sensiblement égale à la hauteur de la levée des soupapes d'échappement pendant la phase d'échappement mais il peut être envisagé de faire varier la hauteur de la levée de ces soupapes d'admission, comme par exemple entre une pleine ouverture O et un tiers d'ouverture O/3 de façon à pouvoir contrôler l'évacuation des gaz brûlés résiduels, comme cela est illustré en traits mixtes fort sur la figure 2.

De même, l'étalement de la levée des soupapes d'admission, pendant cette phase d'échappement, peut être variable de façon à débuter la séquence d'ouverture/fermeture à l'angle V1' et la terminer à un angle de vilebrequin placé avant le PMHa.

De manière préférentielle, la levée maximale et l'étendue maximale de ces soupapes d'admission pendant la phase d'échappement sont moindres que celles des soupapes d'échappement.

## Revendications

1. Procédé de balayage des gaz brûlés résiduels d'un moteur à combustion interne multi cylindres (10) suralimenté à injection directe, notamment de type Diesel, fonctionnant à charges partielles, avec un piston se déplaçant alternativement entre un point mort haut (PMH) et un point mort bas (PMB), et selon lequel on réalise une étape de balayage des gaz brûlés par une séquence d'ouverture/fermeture d'au moins une soupape d'échappement (18) lors la phase d'échappement (E) du moteur et par au moins une séquence d'ouverture/fermeture d'au moins une soupape d'admission (28) pendant cette séquence d'ouverture/fermeture de la soupape d'échappement, et, pendant la phase d'admission (A) du moteur qui succède à la phase d'échappement, à réaliser au moins une séquence d'ouverture/fermeture d'au moins une soupape d'admission (28), **caractérisé en ce qu'**il consiste, après la phase d'échappement, à contrôler le moment de fermeture de la soupape d'admission (28) de manière à entrainer une diminution de la pression à l'échappement (Pe) pour réaliser un différentiel de pression entre la pression à l'admission (Pa) du moteur et la pression à l'échappement (Pe) qui soit favorable à la pression à l'admission (Pa).

2. Procédé de balayage des gaz brûlés résiduels d'un moteur selon la revendication 1, **caractérisé en ce qu'**il consiste à réaliser la fermeture de la soupape d'admission (28) avant la fin de la phase d'admission (A).

3. Procédé de balayage des gaz brûlés résiduels d'un moteur selon la revendication 2, **caractérisé en ce qu'**il consiste à réaliser la fermeture de la soupape d'admission (28) à un angle de vilebrequin qui est supérieure à 0° et inférieur ou égale à +100° avant le point mort bas de la phase d'admission (A).

4. Procédé de balayage des gaz brûlés résiduels d'un moteur selon la revendication 1, **caractérisé en ce qu'**il consiste à réaliser la fermeture de la soupape d'admission (28) après la fin de la phase d'admission (A).

5. Procédé de balayage des gaz brûlés résiduels d'un moteur selon la revendication 4, **caractérisé en ce qu'**il consiste à réaliser la fermeture de la soupape d'admission (28) à un angle de vilebrequin qui est inférieur à -100° et supérieure à 0° après le point mort bas de la phase d'admission (A).

## Claims

1. A method of scavenging the residual burnt gas of a direct-injection supercharged multi-cylinder internal-combustion engine (10), notably of diesel type, running under partial loads, with a piston moving in a reciprocating motion between a top dead center (PMH) and a bottom dead center (PMB), wherein a burnt gas scavenging stage is carried out by means of a sequence of opening/closing at least one exhaust valve (18) during engine exhaust phase (E) and of at least one sequence of opening/closing at least one intake valve (28) during this exhaust valve opening/closing sequence, **characterized in that** it consists, during the scavenging stage, in controlling the closing time of intake valve (28) so as to cause a decrease in exhaust pressure (Pe) in order to achieve a pressure differential between intake pressure (Pa) and exhaust pressure (Pe) favourable to intake pressure (Pa).

2. A method of scavenging the residual burnt gas of an engine as claimed in claim 1, **characterized in that** it consists in performing closing of intake valve (28) before the end of intake phase (A).

3. A method of scavenging the residual burnt gas of an engine as claimed in claim 2, **characterized in that** it consists in performing closing of intake valve (28) at a crank angle ranging between +100° and 0° before the bottom dead center of intake phase (A).

4. A method of scavenging the residual burnt gas of an engine as claimed in claim 1, **characterized in that** it consists in performing closing of intake valve (28) after the end of intake phase (A).

5. A method of scavenging the residual burnt gas of an engine as claimed in claim 4, **characterized in that** it consists in performing closing of intake valve (28) at a crank angle ranging between 0° and -100° after the bottom dead center of intake phase (A).

## Patentansprüche

1. Verfahren zum Spülen der verbrannten Restgase eines turbogeladenen Mehrfachzylinder-Verbrennungsmotors (10) mit Direkteinspritzung, insbesondere des Typs Diesel, der mit teilweisen Chargen funktioniert, mit einem Kolben, der sich abwechselnd zwischen einem oberen Totpunkt (OTP) und einem unteren Totpunkt (UTP) bewegt und gemäß welchem man einen Spülschritt der verbrannten Gase durch eine Öffnungs-/Schließsequenz mindestens eines Auslassventils (18) bei der Auslassphase (E) des Motors ausführt und durch mindestens eine Öffnungs-/Schließsequenz mindestens eines Einlassventils (28) während dieser Öffnungs-/Schließsequenz des Auslassventils, und, während der Einlassphase (A) des Motors, die auf die Auslassphase folgt, mindestens eine Öffnungs-/Schließsequenz mindestens eines Einlassventils (28) durchführt, **dadurch gekennzeichnet, dass** es darin besteht, nach der Auslassphase den Augenblick des Schließens des Einlassventils (28) derart zu steuern, dass eine Verringerung des Drucks am Auslass (Pe) bewirkt wird, um ein Druckdifferenzial zwischen dem Einlassdruck (Pa) des Motors und dem Auslassdruck des Motors (Pe), das für den Druck am Einlass (Pa) günstig ist, herzustellen.

2. Verfahren zum Spülen der verbrannten Restgase eines Motors nach Anspruch 1, **dadurch gekennzeichnet, dass** es darin besteht, das Schließen des Einlassventils (28) vor dem Ende der Einlassphase (A) auszuführen.

3. Verfahren zum Spülen der verbrannten Restgase eines Motors nach Anspruch 2, **dadurch gekennzeichnet, dass** es darin besteht, das Schließen des Einlassventils (28) bei einem Kurbelwellenwinkel, der größer ist als 0° und kleiner oder gleich +100° vor dem unteren Tiefpunkt der Einlassphase (A) auszuführen.

4. Verfahren zum Spülen der verbrannten Restgase eines Motors nach Anspruch 1, **dadurch gekennzeichnet, dass** es darin besteht, das Schließen des Einlassventils (28) nach dem Ende der Einlassphase (A) auszuführen.

5. Verfahren zum Spülen der verbrannten Restgase eines Motors nach Anspruch 4, **dadurch gekennzeichnet, dass** es darin besteht, das Schließen des Einlassventils (28) bei einem Kurbelwellenwinkel auszuführen, der kleiner ist als -100° und größer als 0° nach dem unteren Totpunkt der Einlassphase (A).
